(19) Europäisches Patentamt
European Patent Office
Office européen des brevets

(11) **EP 2 004 482 B1**

(12) **FASCICULE DE BREVET EUROPEEN**

(45) Date de publication et mention
de la délivrance du brevet:
**23.02.2011 Bulletin 2011/08**

(21) Numéro de dépôt: **07731254.4**

(22) Date de dépôt: **05.04.2007**

(51) Int Cl.:
**B64C 13/16** (2006.01)     **G05D 1/08** (2006.01)

(86) Numéro de dépôt international:
**PCT/FR2007/000578**

(87) Numéro de publication internationale:
**WO 2007/116134 (18.10.2007 Gazette 2007/42)**

(54) **PROCEDE ET DISPOSITIF DE PILOTAGE D'UN AERONEF AUTOUR D'UN AXE DE PILOTAGE**

VERFAHREN UND VORRICHTUNG ZUM FLIEGEN EINES FLUGZEUGS UM EINER FLUGZEUGACHSE

METHOD AND DEVICE FOR FLYING AN AIRCRAFT ABOUT AN AIRCRAFT AXIS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **11.04.2006 FR 0603183**

(43) Date de publication de la demande:
**24.12.2008 Bulletin 2008/52**

(73) Titulaire: **AIRBUS OPERATIONS (SAS)**
**31060 Toulouse (FR)**

(72) Inventeurs:
• **DELANNOY, Stéphane**
  **32600 Pujaudran (FR)**
• **BERTIN, Thierry**
  **31000 Toulouse (FR)**

(74) Mandataire: **Hauer, Bernard**
**Bloch & Bonnétat**
**23bis, rue de Turin**
**75008 Paris (FR)**

(56) Documents cités:
**EP-A1- 0 497 660     EP-A1- 1 353 253**
**EP-A2- 0 293 018     US-A1- 2003 205 644**

**Description**

La présente invention concerne un procédé et un dispositif de pilotage d'un aéronef, en particulier d'un avion de transport, autour d'un axe de pilotage.

Bien que non exclusivement, la présente invention s'applique plus particulièrement au pilotage d'un avion autour de son axe de roulis. On sait que le contrôle et le pilotage en roulis d'un avion s'effectuent par la mise en mouvement de gouvernes de roulis que sont les ailerons et/ou les spoilers. Si la voilure de l'avion est suffisamment souple, et si la mise en mouvement des ailerons et/ou des spoilers est relativement dynamique, ce pilotage en roulis engendre une excitation structurale non négligeable, qui génère des accélérations inconfortables le long de la cabine de l'avion.

Une solution usuelle pour minimiser cette excitation structurale et ainsi augmenter le confort du pilote et des passagers consiste à filtrer les mouvements des ailerons et des spoilers, afin d'atténuer les composantes hautes fréquences (supérieures à 1 Hz) de l'ordre de pilotage. Toutefois, cette solution usuelle engendre un problème important de pilotage, car les mouvements des ailerons et des spoilers sont alors déphasés par rapport aux ordres, ce qui peut engendrer une perte de précision du pilotage, voire un couplage instable entre le pilote et la structure de l'avion.

La présente invention concerne un procédé de pilotage d'un aéronef autour d'un axe de pilotage, qui permet de remédier aux inconvénients précités.

A cet effet, selon l'invention, ledit procédé de pilotage d'un aéronef autour d'un axe de pilotage, ledit aéronef comportant une pluralité de N surfaces aérodynamiques commandables susceptibles d'engendrer un mouvement de l'aéronef autour dudit axe de pilotage, procédé selon lequel on réalise, de façon automatique et répétitive, la suite d'opérations successives suivante :

a) on engendre un ordre de pilotage global relatif audit axe de pilotage ;
b) à partir de cet ordre de pilotage global, on détermine des ordres de commande individuels destinés auxdites N surfaces aérodynamiques commandables ; et
c) on applique lesdits ordres de commande individuels auxdites surfaces aérodynamiques,
est remarquable en ce que :

- à l'étape b), on forme, à partir dudit ordre de pilotage global, N ordres de pilotage individuels relatifs respectivement auxdites N surfaces aérodynamiques, en multipliant à chaque fois ledit ordre de pilotage global par au moins un gain Ki qui est positif ou négatif, i étant un entier variant de 1 à N et N étant un entier supérieur à 1, lesdits gains Ki étant tels que :

• 

$$\sum_i \left| Ki \right| = N \ ;$$

•ils permettent de réduire l'excitation de N-1 modes souples de l'aéronef, qui sont responsables d'un inconfort de ce dernier, ces N-1 modes souples étant choisis en fonction des valeurs courantes de paramètres liés à l'aéronef ; et
•appliqués ensemble lesdits N ordres de pilotage individuels engendrant des effets qui correspondent globalement à l'effet dudit ordre de pilotage global, en ce qui concerne le pilotage de l'aéronef autour dudit axe de pilotage,

ces N ordres étant obtenus par la résolution d'un système linéaire de N-1 équations à N inconnues ;

- à l'étape b), on déduit ensuite desdits ordres de pilotage individuels lesdits ordres de commande individuels ; et
- à l'étape c), on applique auxdites surfaces aérodynamiques :

■ initialement, uniquement les ordres de commande individuels qui ont été déduits d'ordres de pilotage individuels obtenus à partir de gains Ki positifs ; et
■ après une durée prédéterminée, tous lesdits ordres de commande individuels déduits à l'étape b).

Ainsi, grâce à l'invention, on différencie l'ordre de pilotage global envoyé aux différentes surfaces aérodynamiques dans le but de réduire l'excitation d'un nombre N-1 de modes souples qui sont responsables de l'inconfort de l'aéronef. Ceci permet de réduire cet inconfort, tout en engendrant un pilotage autour dudit axe de pilotage qui est conforme audit ordre de pilotage global.

On notera que dans le cadre de la présente invention :

- les gains et des valeurs de décalage précisées ci-dessous sont déterminés à partir de modèles mathématiques usuels de l'aéronef. Ces gains et valeurs de décalage dépendent des valeurs courantes de paramètres liés à l'aéronef, et notamment de la vitesse et de la masse de l'aéronef. Les gains et valeurs de décalage sont, de préférence, tabulés, en fonction des paramètres dont ils dépendent, dans des tableaux à deux dimensions. Par conséquent, en fonction des valeurs courantes mesurées de ces paramètres au cours du vol, on choisit automatiquement les gains et valeurs de décalage correspondants à l'aide de ces tableaux. Ces gains et valeurs de décalage peuvent être affinés en prenant en compte d'autres paramètres mesurables sur l'aéronef ; et
- les modes souples de l'aéronef sont connus, de façon usuelle, à partir de modèles mathématiques de l'aéronef. Ces modes souples évoluent dans le domaine de vol de l'aéronef, en fonction des valeurs courantes de paramètres liés audit aéronef, tels que la vitesse, la masse ou le nombre de Mach. Par conséquent, en fonction des valeurs courantes mesurées de ces paramètres au cours du vol, on choisit automatiquement lesdits N-1 modes souples (dont on réduit l'excitation), en particulier à l'aide d'une tabulation.

Dans un mode de réalisation particulier, le procédé conforme à la présente invention est mis en oeuvre en temps réel sur la base de- la mesure de la vitesse de l'aéronef. Ainsi, quand la vitesse courante de l'aéronef atteint un domaine où l'action engendrée par la mise en oeuvre de l'invention est souhaitée, on met en oeuvre ledit procédé. L'activation de cette mise en oeuvre peut dépendre d'autres paramètres, en particulier de ceux précités qui permettent de déterminer les gains et valeurs de décalage.

De façon avantageuse, ladite durée prédéterminée est la demi-période d'un mode souple qui engendre l'effet le plus négatif sur le confort de l'aéronef.

Dans un premier mode de réalisation :

- les gains Ki sont tels que la somme $\sum_i Ki$ est égale à zéro ; et

- à l'étape c) :

    ■ initialement, on applique des ordres de commande engendrant l'effet global Effg suivant :

$$Effg = \sum_j Kj.Eff(t),$$

les différents j étant les entiers i pour lesquels les gains Kj correspondants sont positifs, et Eff(t) étant l'ordre qu'on enverrait de manière égale aux N surfaces aérodynamiques pour obtenir l'effet global N.Eff(t) ; et
    ■ après ladite durée prédéterminée T, on applique des ordres de commande engendrant l'effet global Effg suivant :

$$Effg = \sum_j Kj.Eff(t) + \sum_\ell |K\ell|.Eff(t - T)$$

les différents $\ell$ étant les entiers i pour lesquels les gains $K\ell$ correspondants sont négatifs.

En outre, dans un second mode de réalisation permettant de supprimer un éventuel biais sur l'ordre de pilotage pour le laps de temps entre t=O et t=T:

- les gains Ki sont tels que la somme $\sum_i Ki$ est différente de zéro ; et

- à l'étape c) :

■ initialement, on applique des ordres de commande engendrant l'effet global Effg suivant :

$$Effg = KA. \sum_{j} Kj.Eff(t),$$

les différents j étant les entiers i pour lesquels les gains Kj correspondants sont positifs, Eff(t) étant l'ordre qu'on enverrait de manière égale aux N surfaces aérodynamiques pour obtenir l'effet global N.Eff(t), et KA étant un gain qui vérifie la relation suivante :

$$KA. \sum_{j} Kj = N$$

■ après ladite durée prédéterminée T, on applique des ordres de commande engendrant l'effet global Effg suivant :

$$Effg = \left[ KA. \sum_{j} Kj.Eff(t) \right] - \left[ KB. \sum_{j} Kj.Eff(t-T) \right]$$
$$+ \left[ (KA+KB). \sum_{\ell} |K\ell| .Eff(t-T) \right]$$

les différents $\ell$ étant les entiers i pour lesquels les gains K$\ell$ correspondants sont négatifs, et KB étant un gain qui vérifie la relation suivante :

$$\left[ (KA-KB). \sum_{j} Kj \right] + \left[ (KA+KB). \sum_{\ell} |K\ell| \right] = N$$

Dans une application préférée de l'invention, ledit axe de pilotage est l'axe de roulis de l'aéronef qui est muni de deux ailes, lesdites surfaces aérodynamiques sont des ailerons (et/ou des spoilers) qui sont montés sur lesdites ailes, et N est le nombre d'ailerons (et de spoilers).

Toutefois, la présente -invention peut également être appliquée au pilotage en lacet d'un aéronef de sorte que, dans ce cas, ledit axe de pilotage est l'axe de lacet de l'aéronef, et lesdites surfaces aérodynamiques sont des gouvernes de direction dudit aéronef.

La présente invention concerne également un dispositif de pilotage d'un aéronef autour d'un axe de pilotage, par exemple son axe de roulis ou son axe de lacet, ledit aéronef comportant une pluralité de N surfaces aérodynamiques commandables susceptibles d'engendrer un mouvement de l'aéronef autour dudit axe de pilotage.

A cet effet, selon l'invention, ledit dispositif du type comportant :

- des premiers moyens pour engendrer un ordre de pilotage global relatif audit axe de pilotage ;
- des deuxièmes moyens pour déterminer, à partir de cet ordre de pilotage global, des ordres de commande individuels destinés auxdites N surfaces aérodynamiques commandables ; et
- des troisièmes moyens pour appliquer lesdits ordres de commande individuels auxdites surfaces aérodynamiques, est remarquable en ce que :

  - lesdits deuxièmes moyens comportent des moyens pour former, à partir dudit ordre de pilotage global, N ordres de pilotage individuels relatifs respectivement auxdites N surfaces aérodynamiques, en multipliant à chaque fois ledit ordre de pilotage global par au moins un gain Ki qui est positif ou négatif, i étant un entier variant de 1 à N et N étant un entier supérieur à 1, lesdits gains Ki étant tels que :

■ $\sum_{i}$

■ ils permettent de réduire l'excitation de N-1 modes souples de l'aéronef, qui sont responsables d'un inconfort de ce dernier, les N-1 modes souples étant choisis en fonction des valeurs courantes de paramètres liés à l'aéronef ; et

■ appliqués ensemble lesdits N ordres de pilotage individuels engendrant des effets, qui correspondent globalement à l'effet dudit ordre de pilotage global en ce qui concerne le pilotage de l'aéronef autour dudit axe de pilotage,

ces N ordres étant obtenus par la résolution d'un système linéaire de N-1 équations à N inconnues ;

- lesdits deuxièmes moyens comportent, de plus, des moyens pour déduire desdits ordres de pilotage individuels lesdits ordres de commande individuels ; et
- lesdits troisièmes moyens sont formés pour appliquer auxdites surfaces aérodynamiques :

■ initialement, uniquement les ordres de commande individuels qui ont été déduits d'ordres de pilotage individuels obtenus à partir de gains Ki positifs ; et

■ après une durée prédéterminée, tous lesdits ordres de commande individuels.

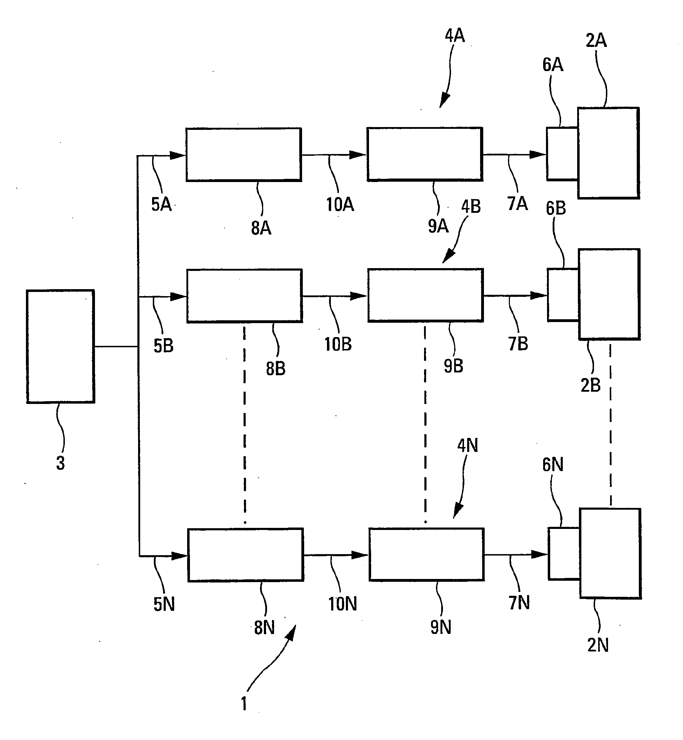

L'unique figure du dessin annexé fera bien comprendre comment l'invention peut être réalisée. Cette figure unique est le schéma synoptique d'un dispositif de pilotage conforme à l'invention.

Le dispositif 1 conforme à l'invention et représenté schématiquement sur la figure est destiné au pilotage d'un aéronef, en particulier d'un avion de transport, autour d'un axe de pilotage, par exemple l'axe de roulis ou l'axe de lacet. Dans le cadre de la présente invention, ledit aéronef (non représenté) comporte une pluralité de N surfaces aérodynamiques 2A, 2B, ...,2N usuelles, qui sont commandables et qui sont susceptibles d'engendrer un mouvement de l'aéronef autour dudit axe de pilotage, N étant un entier supérieur à 1.

Dans une application préférée de l'invention, ledit axe de pilotage est l'axe de roulis de l'aéronef qui correspond à un avion (et qui est donc muni de deux ailes), lesdites surfaces aérodynamiques 2A à 2N sont des ailerons et/ou des spoilers qui sont montés sur lesdites ailes, et N est le nombre d'ailerons et de spoilers.

Toutefois, la présente invention peut également être appliquée au pilotage en lacet d'un aéronef de sorte que, dans ce cas, ledit axe de pilotage est l'axe de lacet de l'aéronef, et lesdites surfaces aérodynamiques 2A à 2N sont des gouvernes de direction dudit aéronef.

Ledit dispositif 1 est du type comportant :

- des moyens usuels 3 permettant d'engendrer un ordre de pilotage global qui est relatif à l'axe de pilotage considéré. De façon usuelle, lesdits moyens 3 comportent notamment un moyen de commande, tel qu'un minimanche ou un palonnier par exemple, qui est susceptible d'être actionné par un pilote de l'aéronef. Ces moyens 3 comportent également un ensemble de sources d'informations usuelles susceptibles de mesurer les valeurs courantes de paramètres liés à l'aéronef, tels que sa vitesse ou son nombre de Mach, et de déterminer les valeurs d'autres paramètres de l'aéronef tels que sa masse ;
- une pluralité de moyens 4A, 4B, ..., 4N qui sont reliés par l'intermédiaire de liaisons 5A, 5B, ..., 5N auxdits moyens 3 et qui sont destinés à déterminer, à partir de l'ordre de pilotage global reçu desdits moyens 3, des ordres de commande individuels destinés respectivement auxdites N surfaces aérodynamiques 2A, 2B, ..., 2N commandables ; et
- des moyens 6A, 6B, ..., 6N, par exemple des moyens d'actionnement usuels, qui sont reliés par l'intermédiaire de liaisons 7A, 7B, ..., 7N auxdits moyens 4A, 4B, ..., 4N et qui sont destinés à appliquer les ordres de commande individuels reçus desdits moyens 4A, 4B, ..., 4N auxdites surfaces aérodynamiques 2A, 2B, ..., 2N.

De plus, selon l'invention :

- lesdits moyens 4A à 4N comportent des moyens 8A, 8B, ..., 8N qui sont destinés à former, à partir dudit ordre de pilotage global reçu desdits moyens 3, N ordres de pilotage individuels relatifs respectivement auxdites N surfaces aérodynamiques 2A à 2N. Lesdits moyens 8A à 8N calculent ces ordres de pilotage individuels, en multipliant à chaque fois ledit ordre de pilotage global par au moins un gain Ki qui est positif ou négatif, i étant un entier variant de 1 à N et N étant un entier supérieur à 1. Selon l'invention, lesdits gains Ki sont tels que les conditions a) à c) suivantes sont vérifiées simultanément :

a) $\sum_{i} \left| Ki \right| = N$ ;

b) ils permettent de réduire l'excitation de N-1 modes souples de l'aéronef, qui sont responsables d'un inconfort de ce dernier, ces N-1 modes souples étant choisis en fonction des valeurs courantes de paramètres liés à l'aéronef ; et

c) appliqués ensemble lesdits N ordres de pilotage individuels engendrant des effets, qui correspondent globalement à l'effet dudit ordre de pilotage global en ce qui concerne le pilotage de l'aéronef autour dudit axe de pilotage (roulis ou lacet) ;

- lesdits moyens 4A à 4N comportent, de plus, des moyens 9A à 9N qui sont reliés par l'intermédiaire de liaisons 1OA à 1ON auxdits moyens 8A à 8N et qui sont destinés à déduire, de façon usuelle, desdits ordres de pilotage individuels lesdits ordres de commande individuels. Pour ce faire, ils réalisent une conversion usuelle ; et
- lesdits moyens 6A à 6N sont formés pour appliquer auxdites surfaces aérodynamiques 2A à 2N :

  ■ initialement (à un temps t=O), uniquement-les ordres de commande individuels qui ont été déduits d'ordres de pilotage individuels obtenus à partir de gains Ki positifs ; et
  ■ après une durée T prédéterminée précisée ci-dessous (c'est-à-dire à un temps t=T), tous lesdits ordres de commande individuels (engendrés par lesdits moyens 9A à 9N).

On sait qu'un aéronef dit souple possède de nombreux modes souples- (fréquence entre 1 et 15 Hz environ), dont de nombreux parmi les plus bas en fréquence (et donc ceux qui sont le plus ressentis par les personnes se trouvant à bord de l'aéronef) présentent une déformée importante de la structure de l'aéronef, et notamment de sa voilure, où apparaissent des noeuds (point immobile par rapport à ce mode) et des ventres (présentant la plus forte déformée entre deux noeuds). Un mode souple est donc caractérisé par sa fréquence, son taux d'amortissement et sa distribution géométrique avec des ventres et des noeuds. Comme les différentes surfaces aérodynamiques 2A à 2N ne sont pas toutes situées au même endroit de la structure, elles sont plus ou moins éloignées de ces ventres et de ces noeuds. Ces caractéristiques géométriques engendrent un principe de base utilisé dans la présente invention, à savoir qu'avec un braquage identique, les différentes surfaces aérodynamiques 2A à 2N n'excitent, ni avec les mêmes gains, ni avec les mêmes phases, les différents modes souples qui présentent un impact sur le confort de l'aéronef en cabine. Aussi, avec N surfaces aérodynamiques 2A à 2N, il existe un ensemble de gains Ki (i allant de 1 à N) tels qu'en demandant une efficacité Effi à chaque surface aérodynamique 2A à 2N, on réduit très sensiblement l'excitation de N-1 modes souples qui sont responsables de l'inconfort en cabine, tout en vérifiant l'équation suivante :

$$\sum_i \left| Ki \right| = N,$$

qui est obtenue de façon usuelle par résolution d'un système linéaire de N-1 équations à N inconnues.

On notera que, de façon usuelle, distribuer un ordre DP sur N surfaces aérodynamiques de sorte qu'elles n'excitent pas un unique mode souple particulier, revient à résoudre un système linéaire de 1 équation à N inconnues. Dans le cadre de la présente invention, comme on a N surfaces aérodynamiques 2A à 2N, distribuer l'ordre DP de manière à ne pas exciter N-1 modes souples, revient donc à résoudre un système linéaire de N-1 équations à N inconnues.

Le système linéaire d'ordre N-1 à résoudre peut se formuler ainsi:

- N : nombre de surfaces aérodynamiques utilisées ;
- M1, M2, ..., MN-1 : les N-1 modes souples que l'on considère ; et
- 2A, 2B, ..., 2N : les N surfaces aérodynamiques utilisées.

On cherche à réduire l'accélération due à un mode souple-particulier Mj, ressentie en un point particulier Pj de l'aéronef (poste de pilotage, siège passager particulier, ...), quand on commande un ordre de roulis global noté Eff. On normalise l'ordre Eff à 1, et on observe l'amplitude maximale de l'accélération due à Mj en Pj (analyse fréquentielle de l'accélération en Pj), ressentie quand cet ordre est appliqué uniquement à la gouverne 2i. On notera Aij cette amplitude.

On peut donc noter que, pour tout i parmi [1, N], pour tout j parmi [1, N-1], Aij est l'amplitude d'accélération au point Pj de l'aéronef, due au seul mode souple Mj, quand un ordre de braquage normalisé est envoyé à la seule gouverne 2i. Si l'on choisit le même point Pj pour tous les modes Mj, on cherche à minimiser l'accélération en un point de l'aéronef. Si on choisit des points Pj différents, cela permet de minimiser des effets locaux des modes souples, selon qu'ils font vibrer plus l'arrière ou l'avant de l'aéronef par exemple.

Le système linéaire à résoudre consiste à calculer les N gains Ki à appliquer aux N gouvernes 2i, tels que, pour un ordre global Eff, l'ordre calculé pour la gouverne 2i est Effi = Ki.Eff, et la composante d'accélération du mode souple Mj au point Pj est nulle. Ce système de N-1 équations aux N inconnues Ki s'écrit :

$$\begin{cases} \sum_1^N Ki.Ai1 = 0 \\ \sum_1^N Ki.Ai2 = 0 \\ ... \\ \sum_1^N Ki.AiN - 1 = 0 \end{cases}$$

ou également :

$$\text{pour tout } j \in [1, N\text{-}1], \sum_1^N Ki.Aij = 0$$

La solution d'un tel système s'écrit comme un jeu de gains Ki, tous proportionnels au gain K1, la valeur du gain K1 étant libre.

Il n'y a alors plus qu'à considérer l'équation $\sum_1^N |Ki| = N$, pour fixer la valeur de K1 et donc de tous les gains Ki.

Les gains Ki et des valeurs de décalage associées et précisées ci-dessous sont donc déterminés, de façon usuelle, à partir de modèles mathématiques usuels de l'aéronef. Ces gains et valeurs de décalage dépendent, de façon usuelle, des valeurs courantes de paramètres liés à l'aéronef, et notamment de la vitesse et de la masse. Ces gains et valeurs de décalage sont, de préférence, tabulés, en fonction des paramètres dont ils dépendent, dans des tableaux à deux dimensions. Par conséquent, en fonction des valeurs courantes de ces paramètres, qui sont mesurées au cours du vol par les sources d'informations précitées, des moyens (faisant par exemple partie desdits moyens 4A à 4N) du dispositif 1 sélectionnent automatiquement les gains et valeurs de décalage correspondants à l'aide de ces tableaux qui sont de préférence mémorisés. Ces gains et valeurs de décalage peuvent être affinés en prenant en compte d'autres paramètres mesurables sur l'aéronef.

En outre, les modes souples de l'aéronef sont connus, de façon usuelle, à partir de modèles mathématiques usuels de l'aéronef. Ces modes souples évoluent dans le domaine de vol de l'aéronef, en fonction des valeurs courantes de paramètres liés audit aéronef, tels que la vitesse, la masse ou le nombre de Mach. Par conséquent, en fonction des valeurs courantes de ces paramètres qui sont mesurées au cours du vol par les sources d'informations précitées, des moyens (faisant par exemple partie desdits moyens 4A à 4N) du dispositif 1 sélectionnent automatiquement les N-1 modes souples, dont le dispositif 1 doit réduire l'excitation.

Par ailleurs, dans un mode de réalisation particulier, le dispositif 1 conforme à l'invention est activé sur la base de la mesure (réalisée par l'une desdites sources d'informations précitées) de la vitesse de l'aéronef. Ainsi, quand la vitesse courante de l'aéronef atteint un domaine où l'action engendrée par le dispositif 1 est souhaitée, ledit dispositif 1 est activé. Cette activation peut dépendre d'autres paramètres, en particulier de ceux précités qui permettent de déterminer les gains et valeurs de décalage.

On considère que les surfaces aérodynamiques 2A à 2N sont toutes, soit en phase, soit en opposition de phase, en ce qui concerne l'excitation des différents modes concernés. Par conséquent, les valeurs de décalage précitées présentent l'une des deux valeurs suivantes : 0 et $\pi$. En conséquence, les différents gains Ki sont soit positifs, soit négatifs. Aussi, pour une fréquence donnée, un signal à t=O est en opposition de phase avec le même signal à t=1, où t1 correspond à la demi-période du signal. On peut donc considérer que, pour chacune des fréquences qui les composent, les signaux qui possèdent un gain Ki négatif sont égaux aux mêmes signaux multipliés par -1 (donc possédant un gain |Ki|), et sont décalés dans le temps d'une demi-période de la fréquence considérée.

Si on considère à t=O une demande d'efficacité Eff(t) envoyée, de façon usuelle, à chacune des N surfaces aérodynamiques 2A à 2N [on effectue donc une demande globale Effg=N.Eff(t)], cette demande va exciter les modes souples générateurs d'inconfort. Si, à la place de cette demande usuelle (réalisée jusqu'à présent), on effectue, conformément à la présente invention, la demande suivante :

- à t=O, on demande une efficacité Ki.Eff(t) à chacune des surfaces aérodynamiques, dont le gain Ki est positif ;
- puis, à partir de t=T, on demande en plus l'efficacité |Ki|.Eff(t-T) à chacune des surfaces aérodynamiques dont le gain Ki est négatif, on obtient, à partir de t=T, une demande équivalente à Effg, mais l'excitation de N-1 modes souples a été fortement réduite, voire annulée.

Bien entendu, on choisit à cet effet les N-1 modes qui impactent principalement le confort de l'aéronef.

Le dispositif de pilotage 1 conforme à l'invention met en oeuvre le principe présenté ci-dessus. Pour ce faire, il différencie donc l'ordre de pilotage global envoyé aux différentes surfaces aérodynamiques 2A à 2N dans le but de réduire l'excitation d'un nombre N-1 de modes souples qui sont responsables de l'inconfort de l'aéronef. Ceci permet de réduire voire d'annuler cet inconfort, tout en engendrant un pilotage autour dudit axe de pilotage (roulis ou lacet) qui est conforme audit ordre de pilotage global.

On notera que ladite durée prédéterminée T est, de préférence (pour des raisons d'efficacité maximale), la demi-période du mode souple (parmi lesdits N-1 modes souples) qui impacte le plus le confort de l'aéronef.

Le mode de réalisation tel que précité du dispositif de pilotage 1 conforme à l'invention permet donc, à l'aide d'un décalage de durée T d'une partie de l'ordre de pilotage, d'obtenir la même commande (pour t supérieur à T) que dans le cas d'un pilotage usuel, mais sans une excitation souple génératrice d'inconfort.

Dans un premier mode de réalisation simplifié, pour lequel les gains Ki sont tels que la somme $\sum_{i} Ki$ est égale à zéro, le dispositif de pilotage 1 est formé de manière à réaliser les opérations suivantes :

- initialement (à t=O), appliquer des ordres de commande engendrant l'effet global Effg suivant :

$$Effg = \sum_{j} Kj.Eff(t),$$

les différents j étant les entiers i pour lesquels les gains Kj correspondants sont positifs, et Eff(t) étant l'ordre qu'on enverrait de manière égale aux N surfaces aérodynamiques 2A à 2N pour obtenir l'effet global N.Eff(t) ; et
- après ladite durée prédéterminée T (à t=T), appliquer des ordres de commande engendrant l'effet global Effg suivant :

$$Effg = \sum_{j} Kj.Eff(t) + \sum_{\ell} |K\ell|.Eff(t - T)$$

les différents $\ell$ étant les entiers i pour lesquels les gains $K\ell$ correspondants sont négatifs.

Comme indiqué précédemment, dans une réalisation usuelle, un ordre de commande individuel DP est distribué de façon identique sur les N surfaces aérodynamiques considérées. Dans ce cas, l'efficacité globale est égale à N.DP. En revanche, dans la présente invention, cet ordre est distribué différemment sur les N surfaces aérodynamiques 2A à 2N. Chaque ordre individuel DPi présente un gain individuel ki et une phase φi dépendant de la fréquence et vérifie ainsi l'expression suivante :

$$DPi = ki.e^{j\varphi i}.DP$$

Selon l'invention, on réalise une approximation en considérant que les surfaces aérodynamiques 2A à 2N sont soit en phase, soit en opposition de phase. Ainsi, les phases peuvent être réduites à deux valeurs 0 et $\pi$, et $e^{j\varphi i}$ prend soit la valeur 1(=e^o), soit la valeur -1(=e^{j\pi}). Par conséquent, les gains Ki précités pris en compte dans la présente invention prennent l'une des valeurs suivantes : + ki, -ki. C'est pourquoi les gains Ki utilisés dans la présente invention ne sont pas des gains habituels représentant des entiers positifs, mais peuvent être positifs ou négatifs.

Pour chacune des fréquences qui les composent, les signaux qui possèdent un gain Ki négatif sont égaux aux mêmes signaux multipliés par -1 (donc possédant un gain |Ki|), et sont décalés dans le temps d'une demi-période T de la fréquence considérée (représentant un décalage de $\pi$).

De plus, comme indiqué précédemment, ces gains Ki (positifs ou négatifs) doivent vérifier l'équation :

$$\sum_i |Ki| = N$$

de manière à conserver l'efficacité globale Effg=N.DP [bien entendu DP=Eff(t)] précitée. En effet, cette efficacité globale Effg s'écrit, après ladite durée T prédéterminée :

$$Effg = \sum_j Kj.Eff(t) + \sum_\ell |K\ell| Eff(t - T)$$

Les différents j sont les entiers i pour lesquels les gains Kj correspondants sont positifs, et les différents $\ell$ sont les entiers i pour lesquels les gains K$\ell$ correspondants sont négatifs.

On obtient donc :

$$Effg = \left( \sum_j Kj + \sum_\ell |K\ell| \right) DP = \sum_i |Ki| DP = N.DP$$

L'efficacité globale Effg vérifie donc bien la valeur N.DP.

On notera qu'avec ledit premier mode de réalisation simplifié précité, il peut toutefois subsister un biais sur l'ordre de pilotage pendant le laps de temps entre t=O et t=T, pendant lequel l'ordre de pilotage n'est pas complètement réalisé avec la solution précitée.

Pour remédier à cet inconvénient, dans un second mode de réalisation, pour lequel les gains Ki sont tels que la somme $\sum_i Ki$ est différente de zéro, le dispositif de pilotage 1 est formé de manière à réaliser les opérations suivantes :

- initialement (à t=O), appliquer des ordres de commande engendrant l'effet global Effg suivant :

$$Effg = KA.\sum_j Kj.Eff(t),$$

KA étant un gain qui vérifie la relation suivante :

$$KA.\sum_j Kj = N$$

- après ladite durée prédéterminée T (à t=T), appliquer des ordres de commande engendrant l'effet global Effg suivant :

$$Effg = \left[ KA.\sum_j Kj.Eff(t) \right] - \left[ KB.\sum_j Kj.Eff(t-T) \right]$$
$$+ \left[ (KA+KB).\sum_\ell |K\ell|.Eff(t-T) \right]$$

les différents $\ell$ étant les entiers i pour lesquels les gains $K\ell$ correspondants sont négatifs, et KB étant un gain qui vérifie la relation suivante :

$$\left[ (KA-KB).\sum_j Kj \right] + \left[ (KA+KB).\sum_\ell |K\ell| \right] = N$$

On notera que le dispositif de pilotage 1 conforme à l'invention permet mathématiquement d'annuler l'excitation de N-1 modes souples, mais, pratiquement, il est très efficace sur au moins N modes structuraux, car plusieurs d'entre eux présentent des déformées très similaires. Un jeu de gains adapté à un mode particulier se trouve naturellement adapté aux autres modes de déformées proches.

## Revendications

1. Procédé de pilotage d'un aéronef autour d'un axe de pilotage, ledit aéronef comportant une pluralité de N surfaces aérodynamiques (2A à 2N) commandables susceptibles d'engendrer un mouvement de l'aéronef autour dudit axe de pilotage, procédé selon lequel on réalise, de façon automatique et répétitive, la suite d'opérations successives suivante :

   a) on engendre un ordre de pilotage global relatif audit axe de pilotage ;
   b) à partir de cet ordre de pilotage global, on détermine des ordres de commande individuels destinés auxdites N surfaces aérodynamiques (2A à 2N) commandables ; et
   c) on applique lesdits ordres de commande individuels auxdites surfaces aérodynamiques (2A à 2N),
   **caractérisé en ce que** :

   - à l'étape b), on forme, à partir dudit ordre de pilotage global, N ordres de pilotage individuels relatifs respectivement auxdites N surfaces aérodynamiques (2A, 2N), en multipliant à chaque fois ledit ordre de pilotage global par au moins un gain Ki qui est positif ou négatif, i étant un entier variant de 1 à N et N étant un entier supérieur à 1, lesdits gains Ki étant tels que :

   ■ $\sum_i |Ki| = N$ ;

   ■ ils permettent de réduire l'excitation de N-1 modes souples de l'aéronef, qui sont responsables d'un inconfort de ce dernier, ces N-1 modes souples étant choisis en fonction des valeurs courantes de paramètres liés à l'aéronef ; et
   ■ appliqués ensemble, lesdits N ordres de pilotage individuels engendrent des effets, qui correspondent globalement à l'effet dudit ordre de pilotage global, en ce qui concerne le pilotage de l'aéronef autour dudit axe de pilotage,
   ces N ordres étant obtenus par la résolution d'un système linéaire de N-1 équations à N inconnues ;

   - à l'étape b), on déduit ensuite desdits ordres de pilotage individuels lesdits ordres de commande individuels ; et
   - à l'étape c), on applique auxdites surfaces aérodynamiques (2A à 2N) :

   ■ initialement, uniquement les ordres de commande individuels qui ont été déduits d'ordres de pilotage individuels obtenus à partir de gains Ki positifs ; et
■ après une durée prédéterminée, tous lesdits ordres de commande individuels déduits à l'étape b).

2. Procédé selon la revendication 1,
**caractérisé en ce que** ladite durée prédéterminée est la demi-période d'un mode souple qui engendre l'effet le plus négatif sur le confort de l'aéronef.

3. Procédé selon l'une des revendications 1 et 2,
**caractérisé en ce que** :

- les gains Ki sont tels que la somme $\sum\limits_{i} Ki$ est égale à zéro ; et

- à l'étape c) :

■ initialement, on applique des ordres de commande engendrant l'effet global Effg suivant :

$$Effg = \sum_{j} Kj.Eff(t),$$

les différents j étant les entiers i pour lesquels les gains Kj correspondants sont positifs, et Eff(t) étant l'ordre qu'on enverrait de manière égale aux N surfaces aérodynamiques (2A à 2N) pour obtenir l'effet global N.Eff(t) ; et
■ après ladite durée prédéterminée T, on applique des ordres de commande engendrant l'effet global Effg suivant :

$$Effg = \sum_{j} Kj.Eff(t) + \sum_{\ell} \left| K\ell \right|.Eff(t - T)$$

les différents $\ell$ étant les entiers i pour lesquels les gains $K\ell$ correspondants sont négatifs.

4. Procédé selon l'une des revendications 1 et 2,
**caractérisé en ce que** :

- les gains Ki sont tels que la somme $\sum\limits_{i} Ki$ est différente de zéro ; et

- à l'étape c) :

■ initialement, on applique des ordres de commande engendrant l'effet global Effg suivant :

$$Effg = KA.\sum_{j} Kj.Eff(t),$$

les différents j étant les entiers i pour lesquels les gains Kj correspondants sont positifs, Eff(t) étant l'ordre qu'on enverrait de manière égale aux N surfaces aérodynamiques (2A à 2N) pour obtenir l'effet global N.Eff(t), et KA étant un gain qui vérifie la relation suivante :

$$KA.\sum_{j} Kj = N$$

■ après ladite durée prédéterminée T, on applique des ordres de commande engendrant l'effet global Effg

suivant :

$$Effg = \left[ KA.\sum_j Kj.Eff(t) \right] - \left[ KB.\sum_j Kj.Eff(t-T) \right]$$

$$+ \left[ (KA+KB).\sum_\ell |K\ell| .Eff(t-T) \right]$$

les différents $\ell$ étant les entiers i pour lesquels les gains $K\ell$ correspondants sont négatifs, et KB étant un gain qui vérifie la relation suivante :

$$\left[ (KA-KB).\sum_j Kj \right] + \left[ (KA+KB).\sum_\ell |K\ell| \right] = N$$

5. Procédé selon l'une des revendications 1 à 4,
**caractérisé en ce que** ledit axe de pilotage est l'axe de roulis de l'aéronef qui est muni de deux ailes, lesdites surfaces aérodynamiques (2A à 2N) sont des ailerons qui sont montés sur lesdites ailes, et N est le nombre d'ailerons.

6. Procédé selon l'une des revendications 1 à 4,
**caractérisé en ce que** ledit axe de pilotage est l'axe de lacet de l'aéronef, et lesdites surfaces aérodynamiques (2A à 2N) sont des gouvernes de direction dudit aéronef.

7. Dispositif de pilotage d'un aéronef autour d'un axe de pilotage, ledit aéronef comportant une pluralité de N surfaces aérodynamiques (2A à 2N) commandables susceptibles d'engendrer un mouvement de l'aéronef autour dudit axe de pilotage, ledit dispositif (1) comportant :

- des premiers moyens (3) pour engendrer un ordre de pilotage global relatif audit axe de pilotage ;
- des deuxièmes moyens (4A à 4N) pour déterminer, à partir de cet ordre de pilotage global, des ordres de commande individuels destinés auxdites N surfaces aérodynamiques (2A à 2N) commandables ; et
- des troisièmes moyens (6A à 6N) pour appliquer lesdits ordres de commande individuels auxdites surfaces aérodynamiques (2A à 2N), **caractérisé en ce que** :
- lesdits deuxièmes moyens (4A à 4N) comportent des moyens (8A à 8N) pour former, à partir dudit ordre de pilotage global, N ordres de pilotage individuels relatifs respectivement auxdites N surfaces aérodynamiques (2A à 2N), en multipliant à chaque fois ledit ordre de pilotage global par au moins un gain Ki qui est positif ou négatif, i étant un entier variant de 1 à N et N étant un entier supérieur à 1, lesdits gains Ki étant tels que :

$$\blacksquare \quad \sum_i |Ki| = N \; ;$$

■ ils permettent de réduire l'excitation de N-1 modes souples de l'aéronef, qui sont responsables d'un inconfort de ce dernier, ces N-1 modes souples étant choisis en fonction des valeurs courantes de paramètres liés à l'aéronef ; et
■ appliqués ensemble, lesdits N ordres de pilotage individuels engendrent des effets qui correspondent globalement à l'effet dudit ordre de pilotage global, en ce qui concerne le pilotage de l'aéronef autour dudit axe de pilotage,
ces N ordres étant obtenus par la résolution d'un système linéaire de N-1 équations à N inconnues ;

- lesdits deuxièmes moyens (4A à 4N) comportent, de plus, des moyens (9A à 9N) pour déduire desdits ordres de pilotage individuels lesdits ordres de commande individuels ; et
- lesdits troisièmes moyens (6A à 6N) sont formés pour appliquer auxdites surfaces aérodynamiques (2A à 2N) :

■ initialement, uniquement les ordres de commande individuels qui ont été déduits d'ordres de pilotage individuels obtenus à partir de gains Ki positifs ; et
■ après une durée prédéterminée, tous lesdits ordres de commande individuels.

8. Aéronef,
   **caractérisé en ce qu'**il comporte un dispositif (1) tel que celui spécifié sous la revendication 7.

**Claims**

1. A method for piloting an aircraft about a piloting axis, said aircraft comprising a plurality of N controllable aerodynamic surfaces (2A to 2N) capable of producing a movement of the aircraft about said piloting axis, according to which method the following series of successive operations is carried out in an automatic and repetitive manner:

   a) an overall piloting command relating to said piloting axis is produced;
   b) on the basis of this overall piloting command, individual control commands are determined, intended for said N controllable aerodynamic surfaces (2A to 2N); and
   c) said individual control commands are applied to said aerodynamic surfaces (2A to 2N),
   **characterized in that**:

   - in step b), on the basis of said overall piloting command, N individual piloting commands relating respectively to said N aerodynamic surfaces (2A, 2N) are formed by multiplying on each occasion said overall piloting command by at least one gain Ki which is positive or negative, i being an integer varying from 1 to N and N being an integer greater than 1, said gains Ki being such that:

   $$\blacksquare \quad \sum_i \left| Ki \right| = N \,;$$

   ■ they make it possible to reduce the excitation of N-1 flexible modes of the aircraft, which are responsible for a discomfort of the latter, these N-1 flexible modes being chosen as a function of the current values of parameters related to the aircraft; and
   ■ applied together, said N individual piloting commands produce effects which correspond overall to the effect of said overall piloting command, as regards the piloting of the aircraft about said piloting axis,

   these N commands being obtained by solving a linear system of N-1 equations with N unknowns;
   - in step b), said individual control commands are thereafter deduced from said individual piloting commands; and
   - in step c), to said aerodynamic surfaces (2A to 2N) are applied:

   ■ initially, solely the individual control commands which have been deduced from individual piloting commands obtained on the basis of positive gains Ki; and
   ■ after a predetermined duration, all said individual control commands deduced in step b).

2. The method as claimed in claim 1,
   **characterized in that** said predetermined duration is the half-period of a flexible mode which produces the most negative effect on the comfort of the aircraft.

3. The method as claimed in one of claims 1 and 2,
   **characterized in that**:

   - the gains Ki are such that the sum $\sum_i Ki$ is equal to zero; and

   - in step c):

   ■ initially, control commands producing the following overall effect Effg are applied:

   $$Effg = \sum_j Kj.Eff(t) \,,$$

the various j being the integers i for which the corresponding gains Kj are positive, and Eff(t) being the command that would be dispatched in an equal manner to the N aerodynamic surfaces (2A to 2N) to obtain the overall effect N.Eff(t); and
■ after said predetermined duration T, control commands producing the following overall effect Effg are applied:

$$Effg = \sum_{j} Kj.Eff(t) + \sum_{\ell} |K\ell|.Eff(t - T)$$

the various being the integers i for which the corresponding gains K$\ell$ are negative.

4. The method as claimed in one of claims 1 and 2, **characterized in that**:

   - the gains Ki are such that the sum $\sum_{i} Ki$ is different from zero; and

   - in step c):

   ■ initially, control commands producing the following overall effect Effg are applied:

$$Effg = KA.\sum_{j} Kj.Eff(t),$$

   the various j being the integers i for which the corresponding gains Kj are positive, Eff(t) being the command that would be dispatched in an equal manner to the N aerodynamic surfaces (2A to 2N) to obtain the overall effect N.Eff(t), and KA being a gain which satisfies the following relation:

$$KA.\sum_{j} Kj = N$$

   ■ after said predetermined duration T, control commands producing the following overall effect Effg are applied:

$$Effg = \left[ KA.\sum_{j} Kj.Eff(t) \right] - \left[ KB.\sum_{j} Kj.Eff(t - T) \right]$$

$$+ \left[ (KA + KB).\sum_{\ell} |K\ell|.Eff(t - T) \right]$$

   the various being the integers i for which the corresponding gains K$\ell$ are negative, and KB being a gain which satisfies the following relation:

$$\left[ (KA - KB).\sum_{j} Kj \right] + \left[ (KA + KB).\sum_{\ell} |K\ell| \right] = N$$

5. The method as claimed in one of claims 1 to 4,
   **characterized in that** said piloting axis is the roll axis of the aircraft which is fitted with two wings, said aerodynamic surfaces (2A to 2N) are ailerons which are mounted on said wings, and N is the number of ailerons.

**6.** The method as claimed in one of claims 1 to 4,
**characterized in that** said piloting axis is the yaw axis of the aircraft, and said aerodynamic surfaces (2A to 2N) are rudders of said aircraft.

**7.** A device for piloting an aircraft about a piloting axis, said aircraft comprising a plurality of N controllable aerodynamic surfaces (2A to 2N) capable of producing a movement of the aircraft about said piloting axis, said device (1) comprising:

- first means (3) for producing an overall piloting command relating to said piloting axis;
- second means (4A to 4N) for determining, on the basis of this overall piloting command, individual control commands intended for said N controllable aerodynamic surfaces (2A to 2N); and
- third means (6A to 6N) for applying said individual control commands to said aerodynamic surfaces (2A to 2N), **characterized in that**:

- said second means (4A to 4N) comprise means (8A to 8N) for forming, on the basis of said overall piloting command, N individual piloting commands relating respectively to said N aerodynamic surfaces (2A to 2N), by multiplying on each occasion said overall piloting command by at least one gain Ki which is positive or negative, i being an integer varying from 1 to N and N being an integer greater than 1, said gains Ki being such that:

■ $\sum_i |Ki| = N$ ;

■ they make it possible to reduce the excitation of N-1 flexible modes of the aircraft, which are responsible for a discomfort of the latter, these N-1 flexible modes being chosen as a function of the current values of parameters related to the aircraft; and
■ applied together, said N individual piloting commands produce effects which correspond overall to the effect of said overall piloting command, as regards the piloting of the aircraft about said piloting axis, these N commands being obtained by solving a linear system of N-1 equations with N unknowns;

- said second means (4A to 4N) comprise, moreover, means (9A to 9N) for deducing said individual control commands from said individual piloting commands; and
- said third means (6A to 6N) are formed so as to apply to said aerodynamic surfaces (2A to 2N):

■ initially, solely the individual control commands which have been deduced from individual piloting commands obtained on the basis of positive gains Ki; and
■ after a predetermined duration, all said individual control commands.

**8.** An aircraft,
**characterized in that** it comprises a device (1) such as that specified under claim 7.

**Patentansprüche**

**1.** Verfahren zur Steuerung eines Flugzeugs um eine Steuerungsachse, wobei das Flugzeug eine Vielzahl von N steuerbaren aerodynamischen Flächen (2A bis 2N) umfasst, die eine Bewegung des Flugzeugs um die Steuerungsachse erzeugen können, Verfahren, nach dem auf automatische und wiederholte Weise die Reihe der folgenden Vorgänge durchgeführt wird:

a) es wird ein globaler Steuerungsbefehl bezüglich der Steuerungsachse erzeugt;
b) ausgehend von diesem globalen Steuerungsbefehl werden individuelle Bedienungsbefehle, bestimmt für die N steuerbaren aerodynamischen Flächen (2A bis 2N), festgelegt,
c) die individuellen Bedienungsbefehle werden auf die aerodynamischen Flächen (2A bis 2N) angewendet,
**dadurch gekennzeichnet, dass**:

- in Schritt b) ausgehend von dem globalen Steuerungsbefehl, N individuelle Steuerungsbefehle bezüglich der N aerodynamischen Flächen (2A, 2N) gebildet werden, wobei jedes Mal der globale Steuerungsbefehl mit mindestens einen Faktor Ki, der positiv oder negativ ist, multipliziert wird, wobei i eine ganze Zahl ist, die von 1 bis N variiert, und N eine ganze Zahl größer 1 ist, wobei die Faktoren Ki derart sind, dass:

$$\sum_i \left| Ki \right| = N$$

• sie erlauben, die Anregung der N-1 flexiblen Modi des Flugzeugs zu reduzieren, die für einen mangelnden Komfort dieses verantwortlich sind, wobei diese N-1 flexiblen Modi in Abhängigkeit von den laufenden Werten der Parameter, die mit dem Flugzeug verbunden sind, ausgewählt werden; und

• zusammen angewendet diese N individuellen Steuerungsbefehle Wirkungen erzeugen, die global der Wirkung des globalen Steuerungsbefehls entsprechen, was die Steuerung des Flugzeugs um die Steuerungsachse anbetrifft,

wobei diese N Befehle durch die Integration eines linearen Systems von N-1 Gleichungen mit N Unbekannten erhalten werden;

- in Schritt b) dann von den individuellen Steuerungsbefehlen die individuellen Bedienungsbefehle abgeleitet werden; und

- in Schritt c) auf die aerodynamischen Flächen (2A bis 2N) folgendes angewendet wird:

• zunächst nur die individuellen Bedienungsbefehle, die von individuellen Steuerungsbefehlen, erhalten ausgehend von positiven Faktoren Ki, abgeleitet wurden; und

• nach einem vorbestimmten Zeitraum all diejenigen individuellen Bedienungsbefehle, die in Schritt b) abgeleitet wurden.

2. Verfahren nach Anspruch 1,
**dadurch gekennzeichnet, dass** der vorbestimmte Zeitraum der Halbtakt eines flexiblen Modus ist, der den negativsten Effekt für den Komfort des Flugzeugs erzeugt.

3. Verfahren nach einem der Ansprüche 1 und 2,
**dadurch gekennzeichnet, dass**:

- die Faktoren Ki derart sind, dass die Summe $\sum_i Ki$

gleich null ist; und
- in Schritt c):

• zunächst Bedienungsbefehle angewendet werden, die die folgende globale Wirkung Effg erzeugen:

$$Effg = \sum_j Kj.Eff(t)$$

wobei die verschiedenen j die ganzen Zahlen i sind, für die die entsprechenden Faktoren Kj positiv sind, und Eff(t) der Befehl ist, der auf gleiche Weise an die N aerodynamischen Flächen (2A bis 2N) geschickt wird, um die globale Wirkung N.Eff(t) zu erhalten; und

• nach dem vorbestimmten Zeitraum T Bedienungsbefehle angewendet werden, die die folgende globale Wirkung Effg erzeugen:

$$Effg = \sum_j Kj.Eff(t) + \sum_\ell \left| K\ell \right| Eff(t - T)$$

wobei die verschiedenen $\ell$ die ganzen Zahlen i sind, für die die entsprechenden Faktoren K$\ell$ negativ sind.

4. Verfahren nach einem der Ansprüche 1 und 2,

**dadurch gekennzeichnet, dass**:

- die Faktoren Ki derart sind, dass die Summe $\sum\limits_{i} Ki$ von null verschieden ist; und

- in Schritt c):

• zunächst Bedienungsbefehle angewendet werden, die die folgende globale Wirkung Effg erzeugen:

$$Effg = KA.\sum_{j} Kj.Eff(t)$$

wobei die verschiedenen j die ganzen Zahlen i sind, für die die entsprechenden Faktoren Kj positiv sind, Eff(t) der Befehl ist, der auf gleiche Weise an die N aerodynamischen Flächen (2A bis 2N) geschickt wird, um die globale Wirkung N.Eff(t) zu erhalten, und KA ein Faktor ist, der die folgende Beziehung verifiziert:

$$KA.\sum_{j} Kj = N$$

• nach dem vorbestimmten Zeitraum T Bedienungsbefehle angewendet werden, die die folgende globale Wirkung Effg erzeugen:

$$Effg = \left[ KA.\sum_{j} Kj.Eff(t) \right] - \left[ KB.\sum_{j} Kj.Eff(t-T) \right]$$
$$+ \left[ (KA+KB).\sum_{\ell} |K\ell| .Eff(t-T) \right]$$

wobei die verschiedenen $\ell$ die ganzen Zahlen i sind, für die die entsprechenden Faktoren K$\ell$ negativ sind, und KB ein Faktor ist, der die folgende Beziehung verifiziert:

$$\left[ (KA-KB).\sum_{j} Kj \right] + \left[ (KA+KB).\sum_{\ell} |K\ell| \right] = N$$

5. Verfahren nach einem der Ansprüche 1 bis 4,
   **dadurch gekennzeichnet, dass** die Steuerungsachse die Rollachse de Flugzeugs ist, das mit zwei Flügeln ausgestattet ist, wobei die aerodynamischen Flächen (2A bis 2N) Querruder sind, die auf den Flügeln montiert sind, und N die Anzahl der Querruder ist.

6. Verfahren nach einem der Ansprüche 1 bis 4,
   **dadurch gekennzeichnet**, das die Steuerungsachse die Hochachse des Flugzeugs ist und die aerodynamischen Flächen (2A bis 2N) Seitenruder des Flugzeugs sind.

7. Vorrichtung zur Steuerung eines Flugzeugs um eine Steuerungsachse, wobei das Flugzeug eine Vielzahl von N steuerbaren aerodynamischen Flächen (2A bis 2N) umfasst, die eine Bewegung des Flugzeugs um die Steuerungsachse erzeugen können, wobei die Vorrichtung (1) Folgendes umfasst:

- erste Mittel (3), um einen globalen Steuerungsbefehl bezüglich der Steuerungsachse zu erzeugen;

**EP 2 004 482 B1**

- zweite Mittel (4A bis 4N), um, ausgehend von diesem globalen Steuerungsbefehl werden individuelle Bedienungsbefehle, bestimmt für die N steuerbaren aerodynamischen Flächen (2A bis 2N), festzulegen; und,
- dritte Mittel (6A bis 6N), um die individuellen Bedienungsbefehle auf die aerodynamischen Flächen (2A bis 2N) anzuwenden,

**dadurch gekennzeichnet, dass**:

- die zweiten Schritte (4A bis 4N) Mittel (8A bis 8N) umfassen, um, ausgehend von dem globalen Steuerungsbefehl, N individuelle Steuerungsbefehle bezüglich der N aerodynamischen Flächen (2A bis 2N) zu bilden, wobei jedes Mal der globale Steuerungsbefehl mit mindestens einen Faktor Ki, der positiv oder negativ ist, multipliziert wird, wobei i eine ganze Zahl ist, die von 1 bis N variiert, und N eine ganze Zahl größer 1 ist, wobei die Faktoren Ki derart sind, dass:

$$\sum_i \left| Ki \right| = N$$

• sie erlauben, die Anregung der N-1 flexiblen Modi des Flugzeugs zu reduzieren, die für einen mangelnden Komfort dieses verantwortlich sind, wobei diese N-1 flexiblen Modi in Abhängigkeit von den laufenden Werten der Parameter, die mit dem Flugzeug verbunden sind, ausgewählt werden; und
• zusammen angewendet diese N individuellen Steuerungsbefehle Wirkungen erzeugen, die global der Wirkung des globalen Steuerungsbefehls entsprechen, was die Steuerung des Flugzeugs um die Steuerungsachse anbetrifft,
wobei diese N Befehle durch die Integration eines linearen Systems von N-1 Gleichungen mit N Unbekannten erhalten werden;

- die zweiten Mittel (4A bis 4N) außerdem Mittel (9A bis 9N) umfassen, um von den individuellen Steuerungsbefehlen die individuellen Bedienungsbefehle abzuleiten; und
- die dritten Mittel (6A bis 6N) gebildet sind, um auf die aerodynamischen Flächen (2A bis 2N) Folgendes anzuwenden:

• zunächst nur die individuellen Bedienungsbefehle, die von individuellen Steuerungsbefehlen, erhalten ausgehend von positiven Faktoren Ki, abgeleitet wurden; und
• nach einem vorbestimmten Zeitraum alle individuellen Bedienungsbefehle.

8.  Flugzeug,
    **dadurch gekennzeichnet, dass** es eine Vorrichtung (1) wie diejenige, die in Anspruch 7 spezifiziert wird, umfasst.

**18**